# FASCICULE DE BREVET EUROPEEN

(11) **EP 2 750 869 B1**
(45) Date de publication et mention de la délivrance du brevet: **27.04.2016**
(21) Numéro de dépôt: 12787762.9
(22) Date de dépôt: 11.10.2012
(51) Int. Cl.: B29D 30/24

(54) **TAMBOUR DE FABRICATION DE PNEUMATIQUE COMPRENANT DES SECTEURS MOBILES**
REIFENAUFBAUTROMMEL MIT BEWEGLICHEN SEKTOREN
TYRE-BUILDING DRUM COMPRISING MOBILE SECTORS

(30) Priorité: 14.10.2011 FR 1159302
(43) Date de publication de la demande: 09.07.2014
(73) Titulaire: Compagnie Générale des Etablissements Michelin, 63000 Clermont-Ferrand (FR); Michelin Recherche et Technique S.A., 1763 Granges-Paccot (CH)
(72) Inventeur: LEBLANC, Dominique, 63040 Clermont-Ferrand Cedex 9 (FR)
(74) Mandataire: Noel, Luminita
(86) Numéro de dépôt international: PCT/FR2012/052316
(87) Numéro de publication internationale: WO 2013/054051

(56) Documents cités:
- EP-A2- 0 465 828
- EP-A2- 0 661 150
- EP-A2- 0 667 229
- DE-B- 1 172 841
- US-A- 3 607 558
- US-A- 4 772 351
- US-A1- 2001 020 510
- US-A1- 2004 216 831
- US-B1- 6 390 166

## Description

L'invention concerne les tambours servant à la fabrication des ébauches de pneumatique.

L'assemblage des éléments formant la bande de roulement d'une ébauche de pneumatique de roue a lieu sur un tambour de confection, également appelé forme sommet. Ces éléments comprennent principalement de la gomme crue. Une fois assemblée, la bande de roulement est ôtée du tambour et déposée sur une carcasse réalisée séparément. L'association des deux forme un bandage. Après mise en forme de ce dernier, on obtient l'ébauche crue que l'on cuit ensuite pour la vulcanisation de la gomme.

La face circonférentielle du tambour servant de support à la bande de roulement est formée par des secteurs montés mobiles en direction radiale. Ainsi la rétractation de tout ou partie des secteurs permet d'extraire la bande de roulement une fois son assemblage achevé.

Des tambours pour la confection de pneumatiques comprenant essentiellement un support central, des secteurs primaires formant une partie d'une face circonférentielle du tambour et montés mobiles par rapport au support suivant une direction radiale à un axe du support, et des secteurs secondaires formant une autre partie de la face circonférentielle et montés mobiles par rapport aux secteurs primaires suivant une direction parallèle à l'axe, sont connus, par exemple, des documents EP 465828 - A, EP 661150 - A et US 3607558 - A.

On connaît aussi du document EP-0 667 229 un tambour d'assemblage dont le diamètre peut être modifié en fonction du modèle de bande de roulement à assembler. Les secteurs ont une forme de peigne dont les dents sont imbriquées et donnent une certaine continuité à la face circonférentielle. On peut donc choisir le diamètre de celle-ci en rapprochant plus ou moins les secteurs en direction radiale.

Toutefois, la face circonférentielle présente des trous plus ou moins grands en fonction du diamètre réglé. Or la présence de trous est pénalisante lors de la pose de bandelettes de gomme crue. En effet, ces bandelettes sont déposées au moyen de rouleaux en appui tangentiel sur le tambour ou la partie de l'ébauche déjà formée et avec une pression d'application importante. En outre, l'opération de pose est souvent complétée par une opération de roulettage pour assurer la cohésion maximale entre les éléments de l'ébauche. Le roulettage implique lui aussi d'exercer une pression radiale sur ces éléments. Au cours de ces deux opérations, la gomme pénètre dans les trous du tambour, ce qui engendre des défauts de confection. De plus, le roulettage est inefficace au niveau des trous de sorte que la cohésion des bandelettes n'y est pas assurée.

La face circonférentielle présente aussi des sauts ou des échelons à l'extrémité libre des dents des peignes lorsque le diamètre de réglage est inférieur au diamètre d'usinage des peignes. Ces sauts nuisent à la cohésion des couches de gomme.

A l'inverse, elle présente des creux par rapport au cylindre géométrique lorsque le diamètre de réglage est supérieur au diamètre d'usinage des peignes. Comme ce rayon d'usinage est proche du rayon minimal, ces creux sont importants lorsque le diamètre réglé est à son maximum.

Ces deux écarts géométriques constituent des erreurs par rapport à la forme cylindrique recherchée pour la pose des éléments.

Un autre tambour est illustré à la figure 2 du document JP60196330A. Dans ce tambour, les secteurs formant la face externe se chevauchent en direction circonférentielle à la façon d'écailles. La réduction de diamètre s'obtient donc en augmentant le recouvrement mutuel des secteurs. Cette fois, le tambour présente une face de travail intégralement continue, à savoir sans trou. Mais cette face présente des sauts de un millimètre ou plus ainsi que des arêtes saillantes. Ces dernières agressent la gomme crue tandis que les sauts nuisent à la cohésion des couches de gomme.

De plus, dans ces deux types de tambour, les solutions retenues pour faire varier le diamètre engendrent de grands écarts par rapport à la forme cylindrique théorique recherchée pour les diamètres qui ne correspondent pas au diamètre d'usinage des secteurs. Ces écarts, en creux ou en relief, créent des chocs et des coupures dans la gomme qui imposent une réduction de la vitesse de pose des bandelettes et donc une perte de productivité.

Un but de l'invention est de fournir un tambour ne présentant pas ce type d'inconvénients.

A cet effet, on prévoit selon l'invention un tambour ou dispositif de confection d'une ébauche de pneumatique comme défini dans la revendication 1, tambour qui comporte :
- un support,
- des secteurs primaires formant une partie d'une face circonférentielle du tambour et montés mobiles par rapport au support suivant une direction radiale à un axe du support ; et
- des secteurs secondaires formant une autre partie de la face circonférentielle et montés mobiles radialement par rapport au support, et suivant une direction parallèle à l'axe par rapport aux secteurs primaires,chaque secteur présentant une face externe circonférentielle ayant au moins un côté d'adaptation non perpendiculaire à l'axe et non coplanaire à l'axe, chaque côté d'adaptation d'un des secteurs primaires s'étendant en regard du côté d'adaptation d'un des secteurs secondaires.

Ainsi, l'espace circonférentiel apparaissant entre les secteurs primaires lors de leur mouvement radial est comblé par les secteurs secondaires. De la sorte, on peut aisément modifier le diamètre de la surface de réception du tambour en déplaçant les secteurs secondaires axialement par rapport aux secteurs primaires De même, on peut conformer les secteurs de façon à rendre la face de travail continue en direction circonférentielle tout autour du tambour et ce, sans générer de grand saut, ni d'arête saillante, ni de trou d'un secteur à l'autre. En outre, lorsque le diamètre de réglage n'est pas rigoureusement le diamètre de fabrication des secteurs, les bords de ceux-ci forment des reliefs très peu saillants par rapport aux secteurs contigus ou encore des creux peu prononcés. Le tambour peut donc être adapté à la géométrie de la bande de roulement à réaliser sans risquer d'agresser la gomme mise en place. De plus, le rouletage assure partout une bonne cohésion entre les différentes couches de gomme. Et on peut effectuer la mise en place des éléments de l'ébauche à grande vitesse et avec une bonne productivité. Des formes avantageuses de l'invention sont définies dans les revendications dépendantes.

Avantageusement, les côtés d'adaptation en regard l'un de l'autre sont contigus.

On forme ainsi une face de travail continue sur le tambour.

Dans un mode de réalisation. sur au moins certains des secteurs, la face externe a une forme trapézoïdale.

On peut prévoir que chaque secteur primaire a une forme de trapèze isocèle non rectangulaire.

On peut également prévoir que chaque secteur secondaire a une forme de trapèze non rectangulaire et à angle droit.

De préférence, les secteurs secondaires sont montés mobiles par rapport aux secteurs primaires suivant une direction circonférentielle du tambour.

Cette direction de mobilité facilite le positionnement des secteurs secondaires en continuité suivant la direction circonférentielle avec les secteurs primaires.

De préférence, chaque secteur secondaire est monté mobile par rapport à l'un des secteurs primaires suivant une trajectoire hélicoïdale.

On peut prévoir que les secteurs primaires sont montés fixes par rapport au support suivant la direction axiale.

Ainsi, ce sont seulement les secteurs secondaires que l'on déplace suivant la direction axiale.

Avantageusement, chaque secteur secondaire est en appui sur l'un des secteurs primaires suivant la direction radiale.

Ainsi, les secteurs primaires assurent le support des secteurs secondaires.

De préférence, le tambour est agencé de sorte que la position des secteurs secondaires en direction radiale est déterminée par celle des secteurs primaires.

Avantageusement, le tambour est agencé de sorte que les secteurs primaires emportent les secteurs secondaires quel que soit leur sens de déplacement radial.

On peut prévoir par exemple que chaque secteur secondaire est retenu par l'un des secteurs primaires au moyen d'un assemblage par complémentarité de forme, par exemple en queue d'aronde ou à profil prismatique.

Un tel assemblage autorise en effet néanmoins le mouvement relatif des secteurs en direction circonférentielle.

De préférence, le tambour est agencé de sorte que les secteurs peuvent être mis en appui les uns contre les autres suivant la direction circonférentielle.

De préférence, le tambour est agencé de sorte que certains des secteurs peuvent être déplacés en direction radiale par rapport au support sans modifier la position des autres secteurs par rapport au support.

Cette propriété facilite l'extraction d'une bande de roulement hors du tambour.

On peut prévoir que les secteurs secondaires sont montés par rapport au support de façon à pouvoir se déplacer par rapport au support suivant la direction axiale sans modifier leur position suivant la direction radiale.

On peut donc par exemple augmenter le diamètre du tambour en éloignant les secteurs en direction centrifuge, puis combler une partie des espaces ainsi crées entre eux en déplaçant les secteurs secondaires suivant la direction axiale.

Dans un mode de réalisation, chaque secteur secondaire est relié au support par un seul des secteurs primaires.

Avantageusement, le tambour comprend des moyens de manoeuvre des secteurs secondaires par rapport au support en direction axiale.

Ainsi, les secteurs primaires assurent seulement le déplacement radial des secteurs secondaires.

Avantageusement, le tambour comprend un organe, tel qu'une came, agencé pour déplacer plusieurs des secteurs simultanément en direction radiale.

Dans un mode de réalisation, l'organe est agencé pour déplacer les secteurs sans déplacer les autres secteurs par rapport au support.

On peut ainsi, une fois l'assemblage achevé, éloigner une partie des secteurs à l'égard de la bande de roulement tout en la maintenant par les autres secteurs afin de faciliter son extraction du tambour.

De préférence, chaque secteur primaire est associé à deux des secteurs secondaires qui sont reliés au support par ce secteur primaire.

De préférence, les deux secteurs secondaires sont reliés l'un à l'autre indépendamment du secteur primaire et du support de sorte que la position axiale de l'un des secteurs secondaires détermine celle de l'autre.

Ainsi, en formant des groupes comprenant chacun un secteur primaire et deux secteurs secondaires, on facilite l'obtention d'une bonne géométrie pour la face circonférentielle de l'ébauche et la réalisation des moyens d'actionnement des différents secteurs.

De préférence, les associations de secteurs forment des premier et deuxième ensembles disjoints d'associations, le tambour étant agencé de sorte qu'on peut déplacer les associations du deuxième ensemble par rapport au support sans déplacer celles du premier ensemble par rapport au support.

Dans un mode de réalisation, le tambour est agencé de sorte que les secteurs des associations du premier ensemble peuvent être mis en appui sur les secteurs des associations du deuxième ensemble suivant la direction radiale lorsque des faces circonférentielles des secteurs s'étendent en prolongement les unes des autres.

Ainsi, une fois le diamètre convenablement réglé, on améliore la rigidité du maintien de tous les secteurs les uns par rapport aux autres pour leur permettre d'encaisser d'importants efforts radiaux lors de la pose et du roulettage des éléments formant l'ébauche.

De préférence, le tambour comprend deux cames, mobiles l'une par rapport à l'autre et aptes à déplacer des secteurs respectifs.

Avantageusement, le tambour est agencé de sorte que l'une des cames entraîne l'autre dans son déplacement.

On peut prévoir que le tambour comprend au moins un actionneur apte à déplacer les cames l'une par rapport à l'autre.

Ainsi, les deux cames peuvent être dites respectivement maître et esclave. De la sorte, par défaut, la came maître déplace avec elle la came esclave. Si besoin, on peut cependant déplacer cette dernière par rapport à la came maître.

Dans un mode de réalisation, le tambour comprend des organes de commande reliés respectivement à la ou chaque came et à un équipage apte à entraîner les secteurs secondaires en direction axiale, les organes de commande étant aptes à être manoeuvrés indépendamment l'un de l'autre.

On prévoit également selon l'invention un procédé de fabrication d'un pneumatique comme défini dans la revendication 22, dans lequel on assemble une partie au moins d'une ébauche crue du pneumatique sur un tambour selon l'invention.

D'autres caractéristiques et avantages de l'invention apparaîtront encore dans la description suivante d'un mode de réalisation et de variantes donnés à titre d'exemples non limitatifs en référence aux dessins annexés sur lesquels :
- les figures 1 à 4 sont des vues en perspective d'un tambour selon un mode de réalisation de l'invention, les figures 1 et 3 et les figures 2 et 4 présentant respectivement le tambour avec son diamètre maximal et son diamètre minimal, les figures 1 et 2 et les figures 3 et 4 présentant respectivement le tambour sans et avec une bande de roulement ;
- les figures 5 et 6 sont des vues respectives d'extrémité de deux groupes de trois secteurs du tambour de la figure 1 ;
- la figure 7 est une vue analogue montrant les groupes des figures 5 et 6 assemblés ;
- les figures 8 et 9 sont des vues en perspective respectivement à l'état assemblé et démonté du groupe de trois secteurs de la figure 5 ;
- les figures 10, 11 et 12 sont des vues en perspective des secteurs du groupe de la figure 9 ;
- la figure 13 est une vue analogue à la figure 10 montrant le secteur primaire du groupe de la figure 6 ;
- les figures 14 et 15 sont des vues analogues à la figure 7 montrant des mesures de rayon et d'arc sur le tambour de la figure 1 ;
- les figures 16 et 17 sont des vues en perspective des deux groupes de trois secteurs des figures 5 et 6 avec leur moyen de liaison au support du tambour ;
- la figure 18 est une vue partielle en coupe axiale du tambour de la figure 1 ;
- les figures 19 et 20 sont deux vues en perspective du tambour de la figure 1 dont la plupart des secteurs ont été ôtés ;
- la figure 21 est une vue en coupe dans un plan perpendiculaire à l'axe du tambour de la figure 20, montrant l'une des cames ;
- la figure 22 est une vue axiale des secteurs du tambour de la figure 1 ;
- la figure 23 illustre à plus grande échelle une partie du tambour de la figure 22 ;
- les figures 24 et 25 illustrent la partie du tambour de la figure 23 au cours de deux autres étapes du procédé de mise en oeuvre de l'invention ;(11, 13)
- les figures 26 et 27 sont des vues en perspective d'un tambour selon une variante de réalisation de l'invention ; et
- la figure 28 est une vue analogue à la figure 26 illustrant une autre variante de réalisation.

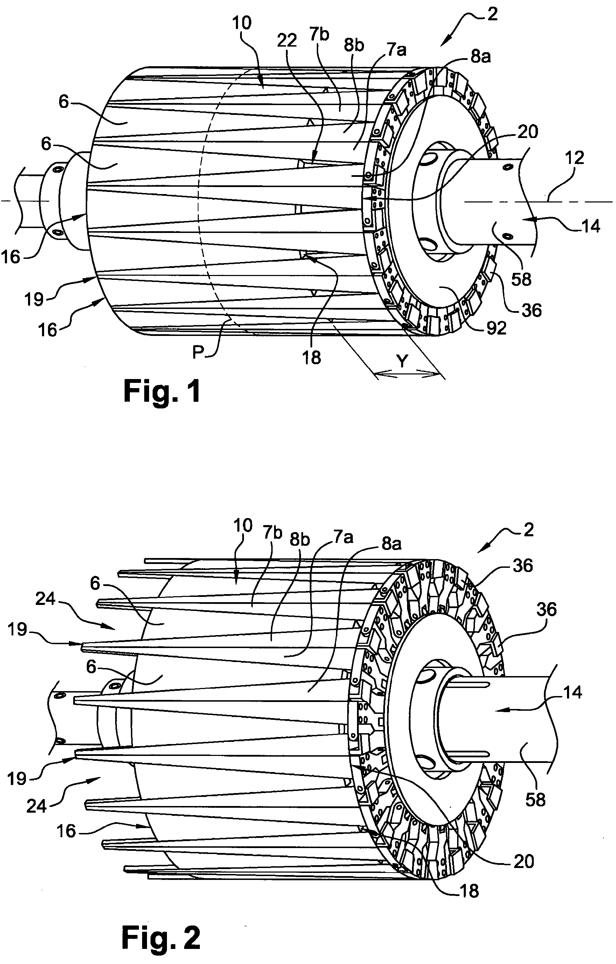

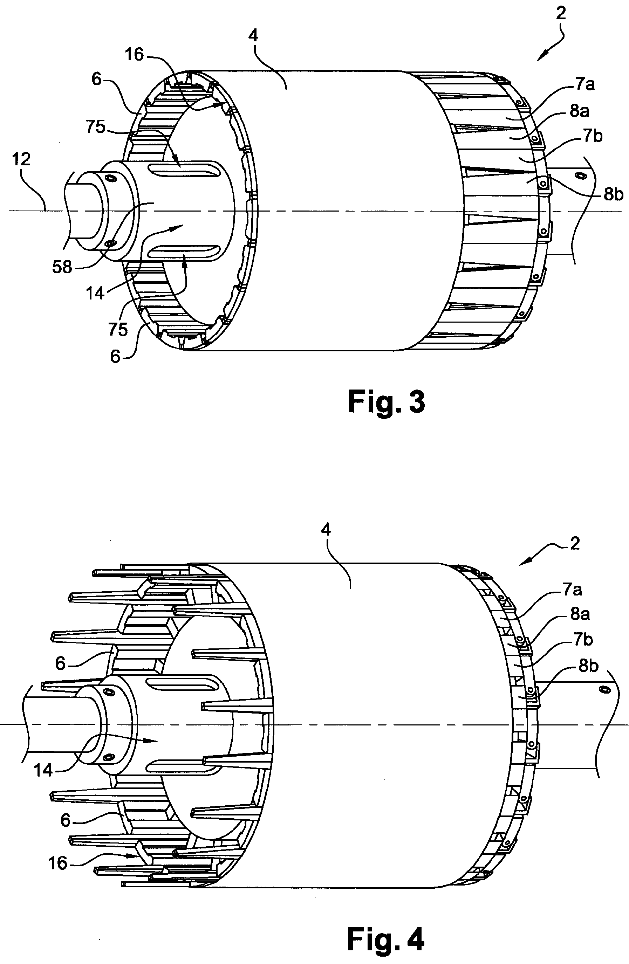

On a illustré aux figures 1 à 25 un tambour 2 selon un mode de réalisation de l'invention. Ce tambour sert à l'assemblage des éléments formant une bande de roulement 4 pour une ébauche crue de pneumatique, la bande étant illustrée aux figures 3, 4 et 22 à 25. Le pneumatique est destiné à une roue de véhicule qui pourra être un véhicule utilitaire, un véhicule de type léger, un véhicule de tourisme, un véhicule de type poids lourd ou encore un engin de génie civil.

Le tambour comprend un support 14 ayant une forme générale à symétrie de révolution d'axe 12 qui forme l'axe principal du tambour. Dans toute la suite, et sauf indication contraire, la direction axiale désigne une direction parallèle à l'axe 12 et la direction radiale désigne une direction quelconque radiale à ce dernier.

Le tambour présente des secteurs 6, 7a, 8a, 7b et 8b qui s'étendent en périphérie du support pour former la face circonférentielle 10 du tambour qui forme la face de travail sur laquelle sont disposés les éléments de l'ébauche 4. Cette face 10 a, en l'espèce, une forme générale cylindrique à section circulaire dans un plan perpendiculaire à l'axe 12. Le tambour forme donc ici ce que l'homme du métier désigne souvent par une « forme plate ».

Les secteurs 6 sont appelés ici « secteurs primaires ». Ils sont montés fixes par rapport au support 14 suivant la direction axiale, mais sont montés mobiles par rapport à ce support suivant la direction radiale.

Les secteurs 7a, 8a, 7b et 8b sont appelés « secteurs secondaires ». Ils sont montés mobiles par rapport aux secteurs primaires 6 et par rapport au support 14 suivant la direction axiale. Ils sont de plus montés mobiles par rapport au support suivant la direction radiale.

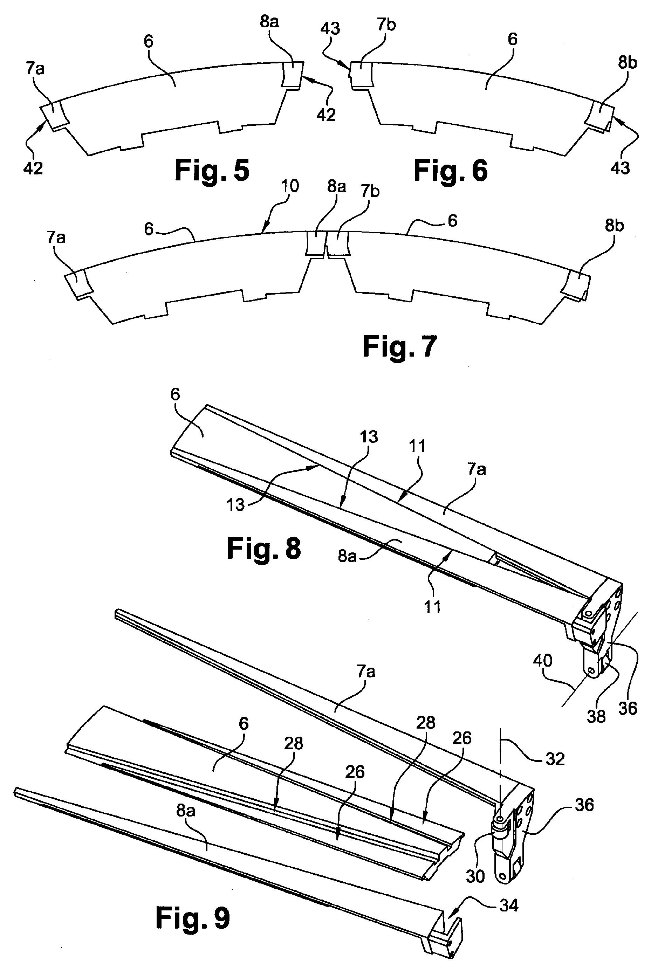

Chaque secteur primaire et secondaire a une forme générale allongée suivant la direction axiale. Chaque secteur comprend une paroi qui présente une face externe convexe qui forme une portion de la face 10. La face du secteur a une forme cylindrique d'axe 12 dans un plan perpendiculaire à ce dernier et présente, en vue suivant la direction radiale, une forme générale trapézoïdale non rectangle. Sur les secteurs primaires 6, le trapèze est isocèle tandis que sur les secteurs secondaires 7a, 8a, 7b et 8b, il présente un angle droit.Sur chaque secteur primaire 6, comme illustré à la figure 8, la face externe circonférentielle présente deux plus grands côtés 11, ou côtés d'adaptation, symétriques l'un de l'autre par rapport à un plan radial à l'axe. Sur chaque secteur secondaire 7a, 8a, 7b et 8b, la face externe circonférentielle présente un plus grand côté 13 ou côté d'adaptation.

Chacun des côtés d'adaptation 11 et 13 est gauche, non perpendiculaire à l'axe et non-coplanaire à l'axe de sorte qu'il n'existe pas de plan radial à l'axe dans lequel il est inscrit.

Tous les secteurs sont disposés en se succédant l'un après l'autre autour de l'axe 12 pour former la face circonférentielle 10 au moyen de leurs faces externes qui s'étendent en continuité les unes des autres. Les secteurs primaires 6 sont régulièrement disposés autour de l'axe 12 de sorte que chaque secteur primaire est l'image du précédent par une rotation autour de cet axe d'angle constant pour tous les secteurs. Sur chaque secteur primaire, la face externe présente un petit côté 18 et un grand côté 16 parallèles entre eux. Les grands côtés 16 sont disposés en coïncidence et à la suite les uns des autres pour former un cercle qui constitue le bord axial gauche du tambour sur la figure 1.

Au contraire, les secteurs secondaires 7a, 8a, 7b et 8b sont disposés tête-bêche avec les secteurs primaires. Ainsi, chaque secteur secondaire présente un petit côté 19 et un grand côté 20 qui forment les deux côtés parallèles du trapèze. Le petit côté 19 peut être mis en coïncidence avec les grands côtés 16 des secteurs primaires comme sur la figure 1, tandis que le grand côté 20 des secteurs secondaires est plus proche du petit côté 18 des secteurs primaires.

Les côtés 16, 18, 19 et 20 sont perpendiculaires à l'axe.

En outre, chaque secteur primaire 6 est flanqué dans la succession par deux secteurs secondaires 7a et 8a ou 7b et 8b sur ses côtés d'adaptation 11 respectifs. Ces derniers sont en contact avec le secteur primaire par leur plus grand côté 13 ou côté d'adaptation. Il s'ensuit que, en direction circonférentielle, deux secteurs primaires 6 sont séparés dans la succession par deux secteurs secondaires qui sont en contact mutuel par l'un des côtés formant leur angle droit ainsi que par le coin présentant ce dernier.

Chaque côté d'adaptation 11 est donc en regard d'un côté d'adaptation 13 et contigu à ce dernier, et réciproquement. Ils sont localement parallèles.

Comme on le verra dans la suite, le tambour est agencé de sorte que, lorsqu'on déplace les secteurs primaires 6 dans une direction radiale opposée à l'axe 12, les secteurs secondaires se déplacent avec ceux-ci dans la même direction.

On a ainsi illustré aux figures 1 et 3 la configuration de plus petit diamètre du tambour. La portion gauche de la face 10 présente une surface continue en direction circonférentielle et suivant la direction axiale tout autour du tambour. Cette portion est exempte de trou et occupe plus de la moitié de la longueur de la face en direction axiale. Elle forme donc un support continu pour la réalisation d'une ébauche, comme illustré à la figure 3. La face 10 présente des trous 22 formant des discontinuités dans sa portion droite mais celle-ci n'est pas utilisée.

Dans la configuration de diamètre maximal illustrée aux figures 2 et 4, c'est cette fois la portion droite de la face 10 qui est intégralement continue en direction circonférentielle et en direction axiale tout autour du tambour et peut servir à la confection d'une bande de roulement de grand diamètre. Des espaces vides 24 séparent les secteurs secondaires sur la portion gauche de la face mais cette zone n'est pas utilisée.

Le tambour peut être réglé pour prendre tout diamètre intermédiaire entre ces deux valeurs extrêmes. Dans la zone de travail continu qui existe toujours, la face 10 ne présente ni trou, ni arête trop saillante, ni creux prononcé, ce qui permet d'effectuer convenablement la pose des bandelettes de gomme et leur roulettage. Les contacts entre les faces circonférentielles des secteurs qui se succèdent sont jointifs et leurs arêtes sont en coïncidence.

Quel que soit le diamètre réglé, la portion continue de la face 10 qui sert à confectionner l'ébauche est toujours définie notamment par l'intégralité des secteurs primaires 6, les secteurs secondaires venant occuper les espaces entre ces derniers par une fraction de leur longueur. Par conséquent, le plan médian de pose des produits formant la bande de roulement est toujours celui défini par les secteurs primaires et est constant. Il s'agit du plan P sur la figure 1 indiqué en traits pointillés. De plus, ce plan ne varie pas en position axiale par rapport au support 14.

Les secteurs sont répartis en groupes comprenant chacun un secteur primaire 6 et les deux secteurs 7a et 8a ou bien 7b et 8b qui lui sont contigus. De tels groupes ont été illustrés notamment aux figures 7 à 9. Chaque secteur primaire et chaque groupe présente un plan de symétrie radial. L'augmentation de largeur de chaque groupe a lieu de façon symétrique par rapport à ce plan à tout instant, ce qui garantit l'exactitude de l'expansion en diamètre et la coïncidence des arêtes de contact entre les groupes.

Les deux secteurs secondaires de chaque groupe sont solidaires du secteur primaire du même groupe. Ce dernier est le seul des secteurs primaires qui les relie au support. Ils sont aussi reliés au support par d'autres moyens que nous décrirons plus loin. De plus, les secteurs secondaires sont en appui radial en direction de l'axe sur des faces cylindriques 26 du secteur primaire. Au sein de chaque groupe, la reprise des efforts radiaux subis par la face externe des secteurs secondaires est donc assurée par le contact de leur face interne 46 sur cette face 26 du secteur primaire.

Au cours de leur déplacement radial, les secteurs secondaires 7a, 8a, 7b et 8b sont solidaires du secteur primaire 6 associé. Ces secteurs sont configurés de sorte que le secteur primaire emporte avec lui les deux secteurs secondaires associés quel que soit son sens de déplacement radial. De la sorte, la position radiale des secteurs secondaires est déterminée par la position radiale du secteur primaire du même groupe.

Chaque secteur secondaire 7a, 8a, 7b et 8b est monté mobile par rapport au secteur primaire associé 6 au moyen d'une liaison hélicoïdale d'axe 12. En l'espèce, le secteur secondaire est retenu sur le secteur primaire au moyen d'un assemblage par complémentarité de forme.

Pour cela, le secteur primaire 6, qui est d'un seul tenant, présente sur son côté circonférentiel deux rainures hélicoïdales 28 pour les secteurs secondaires respectifs. Chacun de ces derniers comprend sur un côté interne une nervure hélicoïdale 30 ayant une forme complémentaire à celle de la rainure pour définir le guidage du secteur secondaire suivant la trajectoire hélicoïdale par rapport au secteur primaire. Il s'agit donc d'un guidage prismatique en l'espèce. On peut prévoir de donner à la rainure et à la nervure une forme en queue d'aronde. En raison de cette liaison hélicoïdale, on voit que chaque secteur secondaire est également mobile par rapport au support et par rapport au secteur primaire suivant la direction circonférentielle du tambour. Lorsque chaque secteur secondaire est assemblé au secteur primaire, au-dessus d'une partie de ce dernier, leurs côtés longitudinaux respectifs peuvent venir en coïncidence dans un plan radial.

Chaque secteur secondaire 7a, 7b présente à son extrémité la plus large en direction circonférentielle un relief s'étendant en saillie en direction circonférentielle et en direction de l'autre secteur secondaire 8a, 8b du même groupe. Ce relief porte un galet 30 monté mobile à rotation autour d'un axe radial 32. L'autre secteur secondaire 8a, 8b du groupe présente à son extrémité la plus large une chape formant un logement 34 en « U » ouvert en direction du galet 30 et occupé par ce dernier.

Le secteur secondaire 7a, 7b porte également à son extrémité la plus large un pied 36 s'étendant en saillie du reste du secteur en direction de l'axe 12 et portant un galet 38 monté mobile à rotation autour d'un axe 40 orthogonal à l'axe 12 et tangent à la direction circonférentielle du tambour. Comme on le verra plus bas, le pied 36 et le galet 38 servent à entraîner le secteur 7a, 7b en direction axiale. Sachant par ailleurs que le galet 30 est reçu dans le logement 34, le secteur secondaire 8a, 8b est solidaire du secteur 7a, 7b en direction axiale et ce, quel que soit leur écartement mutuel en direction circonférentielle puisque le galet reste toujours plus ou moins dans le logement 34.

Les groupes de secteurs se succèdent suivant la direction circonférentielle. Chaque groupe est agencé pour être en appui suivant la direction circonférentielle contre chacun de ses deux groupes voisins.

On distingue deux types de groupes de trois secteurs. Les groupes du premier et du deuxième type sont disposés en alternance suivant la direction circonférentielle du tambour et sont en nombre égal sur le tambour. Les groupes du premier type, formés par un secteur primaire 6 et les secteurs secondaires 8a et 7a sont identiques en tous points à ceux du deuxième type formés par les secteurs 6, 8b et 7b mis à part la forme des côtés circonférentiels externes de leurs secteurs secondaires comme illustré aux figures 5 à 7.

En effet, dans tous les groupes, illustrés aux figures 5 et 6, les deux faces latérales circonférentielles externes 42, 43 du groupe sont planes, parallèles à l'axe 12 et non radiales. Les deux faces 42 et 43 de chaque groupe sont symétriques l'une de l'autre par rapport au plan radial médian du groupe.

Dans les groupes du premier type, illustrés à la figure 5, ces deux faces 42 sont inclinées de façon à être orientées légèrement en direction de l'axe 12. Elles forment donc un angle donc le sommet est situé du côté du tambour. Au contraire, dans les groupes du deuxième type, illustrés à la figure 6, ces deux faces 43 sont inclinées de façon à être orientées légèrement en direction opposée à l'axe 12. Elles forment un angle dont le sommet est situé du côté opposé au tambour. Et les faces 42 et 43 sont orientées de sorte que les faces 42 et 43 contiguës viennent en contact surfacique mutuel et réalisent un appui circonférentiel lorsque le tambour forme la surface de pose continue, comme illustré à la figure 7 De plus, pour les groupes du premier type, à gauche sur la figure 7, il s'agit aussi d'un appui radial sur les groupe du deuxième type en direction de l'axe.Cet appui améliore l'immobilisation des groupes lors de la pose ou du rouletage d'un élément. Les contraintes radiales exercées sur l'un des groupes du premier type lors de l'utilisation sont donc au moins en partie transférées sur les deux groupes contigus et encaissées par ceux-ci. En d'autres termes, les sollicitations en direction de l'axe reçues par ce groupe sont transmises à ses voisins. Chaque face 42, 43 forme avec le plan radial un angle compris entre 10 et 20° par exemple.

Les faces externes cylindriques de tous les secteurs ont un même rayon Ru. Il s'agit ici d'un rayon d'usinage.

Les caractéristiques géométriques de l'hélice des rainures et des nervures sont fonction de la gamme de diamètres que doit présenter la face 10.

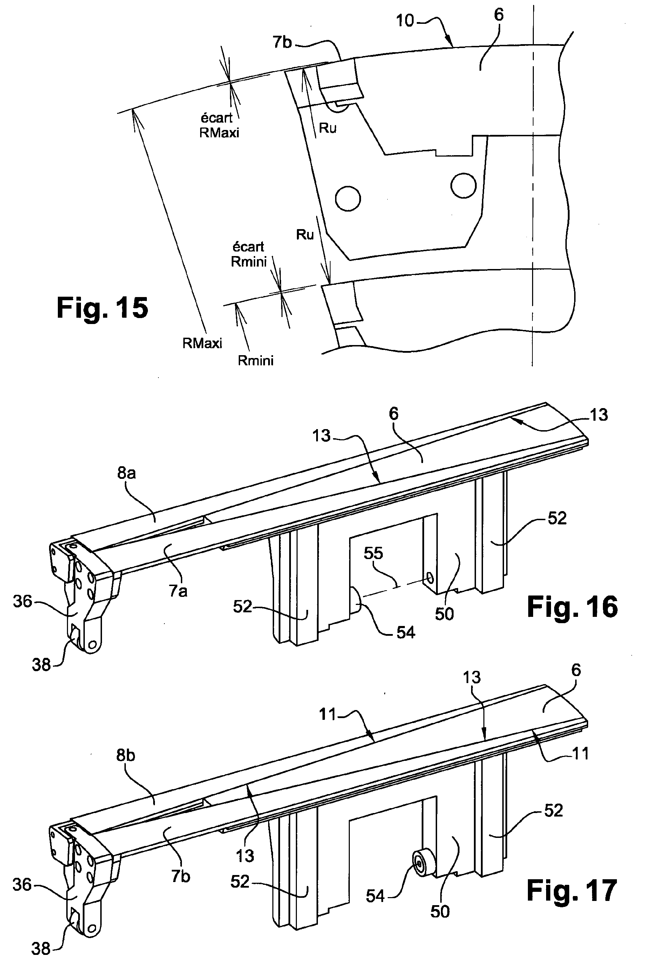

On définit par Rmini et Rmaxi les rayons minimal et maximal que peut prendre la face 10. En l'espèce, on choisit la valeur de Ru pour qu'elle soit légèrement supérieure au rayon Rmoyen formant la moyenne entre Rmaxi et Rmini. De la sorte, les écarts maximum entre Rmaxi et Ru et Rmini et Ru, indiqués respectivement écart Rmaxi et écart Rmini sur la figure 15, sont minimaux et optimisés.

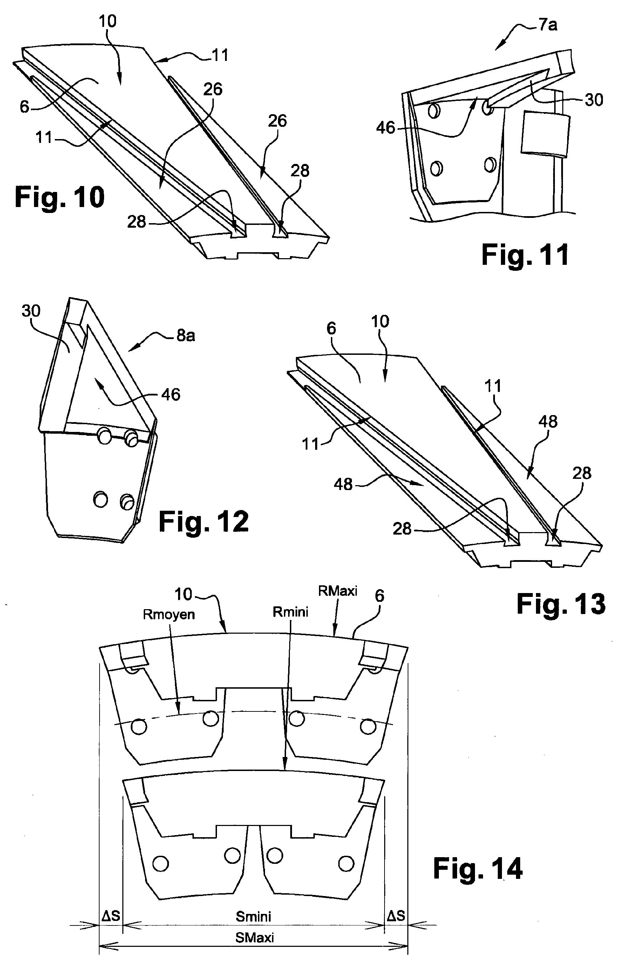

En référence aux figures 14 et 15, chaque groupe présente sur sa face circonférentielle un arc de longueur Smini lorsque le tambour a son plus petit diamètre et Smaxi lorsqu'il a son plus grand diamètre. On désigne par ΔS un arc qui correspond à la moitié de la différence entre Smaxi et Smini.

Les hélices formant la trajectoire des deux secteurs secondaires associés à un même secteur primaire sont symétriques l'une de l'autre par rapport au plan radial de symétrie de ce dernier. En référence à la figure 1, on désigne par « Y » la course totale des secteurs secondaires en direction axiale entre les deux configurations extrêmes du tambour. Il s'ensuit que le pas P de l'hélice vérifie la relation suivante : P = 2π x Ru x Y / ΔS.

Comme illustré aux figures 16 et 17, un jambage 50 est rigidement fixé au secteur primaire 6 de chaque groupe. Ce jambage s'étend en saillie de la face interne du secteur et en direction de l'axe. Il présente en l'espèce deux jambes 52 espacées l'une de l'autre suivant la direction axiale et s'étendant chacune en direction radiale. Chaque jambe a une forme profilée suivant la direction radiale, de section polygonale dans un plan transversal. L'une des deux jambes 52 porte un galet rotatif 54 monté mobile autour d'un axe 55 parallèle à l'axe 12. Ce galet se situe du côté de la jambe orientée vers l'autre jambe. Dans les groupes du premier type, le galet s'étend sur la jambe 52 la plus proche du pied 36 tandis qu'il s'étend sur l'autre jambe dans les groupes du deuxième type.

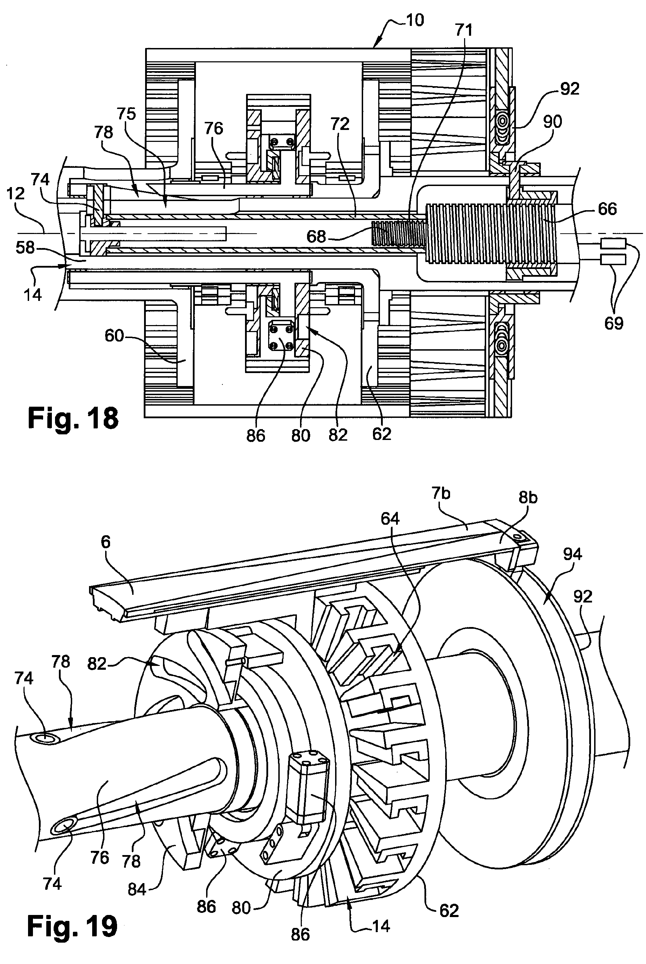

En référence aux figures 18 à 20, le support 14 comprend un arbre creux 58 à symétrie de révolution autour de l'axe 12. Il comporte aussi deux flasques 60, 62 rigidement solidaires de l'arbre 58. Chaque flasque a une forme générale de disque d'axe 12, les deux flasques étant espacés l'un de l'autre en direction axiale. Chaque flasque 60, 62 présente des logements 64 ayant une forme profilée en direction radiale et polygonale en section transversale, complémentaire de celle des jambes 52 qu'ils sont destinés à recevoir à coulissement, les deux jambes de chaque secteur primaire se logeant dans deux logements des flasques respectifs. Les flasques assurent ainsi un guidage prismatique de chaque groupe en coulissement radial.

Le tambour comprend deux organes de commande formés par deux vis 68 et 66 d'axe 12 reçues dans l'arbre 58 et présentant deux filets respectifs se succédant en direction axiale, le second présentant un plus grand diamètre que le premier. Le tambour comprend deux moteurs 69 en prise avec les deux vis respectives par des moyens de liaison adaptés tels que des crabotages. Les deux vis peuvent ainsi être mises en rotation indépendamment l'une de l'autre. Les deux vis sont immobilisées en coulissement axial par rapport à l'arbre 58.

Le filet de la vis 68 est en prise avec un écrou 71 au moyen d'une liaison vis-écrou. L'écrou est rigidement solidaire d'un tube 72 qui porte à son extrémité gauche sur la figure 18 trois doigts 74 s'étendant en saillie de la face externe du tube suivant la direction radiale. Par conséquent, la rotation de la vis 68 entraîne le coulissement axial de l'écrou 71, du tube 72 et des doigts 74.

L'arbre 58 présente trois rainures rectilignes traversantes 75 parallèles à l'axe 12, dans lesquelles pénètrent les doigts 74 de sorte que le tube 72 est monté mobile à coulissement par rapport au support. Le tambour comprend un fourreau 76 entourant l'arbre 58, bloqué à l'égard de son coulissement axial et présentant trois rainures hélicoïdales traversantes 78 dans lesquelles pénètrent les doigts 74 respectifs. Dans ces conditions, le coulissement axial des doigts 74 entraîne la rotation du fourreau 76 autour de l'axe.

Le support comprend une came 80 rigidement solidaire du fourreau 76 et présentant une forme générale de disque d'axe 12. La came présente des rainures traversantes 82 en spirale s'étendant d'une face à l'autre du disque. Dans ces rainures respectives, sont reçus les galets 54 des groupes du premier type pour lesquels ces rainures forment des surfaces de rampe. Ainsi, la rotation de la came 80 autour de l'axe 12 entraîne le coulissement radial de ces groupes guidés par ailleurs au moyen des flasques 60 et 62.

Le tambour comprend une deuxième came 84 identique à la première et montée mobile à rotation par rapport au fourreau 76 sur lequel elle est enfilée. Cette came est par ailleurs mobile à rotation par rapport à la came 80. Des dispositifs 86 tels que des vérins ou analogues relient les deux cames directement l'une à l'autre de façon à permettre sur commande la rotation de la deuxième came 84 par rapport à la première came 80. La deuxième came 84 est une came esclave par rapport à la première 80 qui est une came maître. Ainsi, en l'absence de la commande des vérins 86, la came 84 est rigidement solidaire de l'autre. En revanche, on peut lui donner un mouvement propre et indépendant de celui de la came 80 sur commande des vérins. Les rainures 82 de la came 84 reçoivent quant à elle les galets des groupes du deuxième type pour commander leur mouvement radial. Cette commande différenciée des deux cames et donc des deux groupes de secteurs permet d'éviter les interférences entre eux au cours de leur mouvement comme on le verra plus loin.

Le tambour comporte en outre un fourreau 90 présentant un filet en prise avec la vis 66 de sorte que la rotation de cette dernière entraîne le coulissement axial du fourreau. Ce fourreau fait partie d'un équipage qui comprend un flasque étrier 92 présentant une gorge circonférentielle 94 à profil en « U » dans un plan radial à l'axe 12. Dans cette gorge sont logés les pieds 36 des groupes, le galet 38 étant en appui contre l'une ou l'autre des faces de la gorge. La rotation de la vis 66 entraîne donc les secteurs secondaires en coulissement axial.

La vis 68 commande donc le mouvement radial de tous les secteurs par l'intermédiaire des cames. La vis 66 commande pour sa part le mouvement axial des secteurs secondaires par l'intermédiaire de l'étrier 92.

Lors de la mise en oeuvre du procédé de fabrication du pneumatique, pour modifier le diamètre du tambour, on procède comme suit.

On suppose qu'on souhaite augmenter le diamètre du tambour en fonction des dimensions de la bande de roulement à assembler. On commande tout d'abord l'extension radiale des groupes, c'est-à-dire leur mouvement centrifuge, sans déplacer dans chaque groupe les secteurs les uns par rapport aux autres. Pour cela, on commande le moteur qui actionne la vis 68 pour mettre les deux cames 80 et 84 en mouvement (sans mouvement relatif entre elles). Au cours de ce mouvement, des espaces circonférentiels apparaissent entre les groupes qui s'éloignent les uns des autres. On stoppe ce mouvement une fois atteint le diamètre souhaité pour le tambour. La position des secteurs en direction axiale n'a pas varié au cours de ce mouvement.

Ensuite, on effectue le déplacement axial général des secteurs secondaires par rapport aux secteurs primaires en commandant le moteur de la vis 66, ce qui rapproche le flasque 92 des cames. Chaque secteur secondaire suit une trajectoire en hélice en étant guidé par le secteur primaire qui le porte et se déplacent notamment suivant la direction de l'axe 12. Les secteurs secondaires comblent progressivement une partie des espaces entre les groupes pour rendre la surface du tambour continue en direction circonférentielle. La position des secteurs en direction radiale n'a pas varié au cours de ce mouvement.

Pour réduire le diamètre du tambour, on effectue les opérations contraires dans l'ordre inverse.

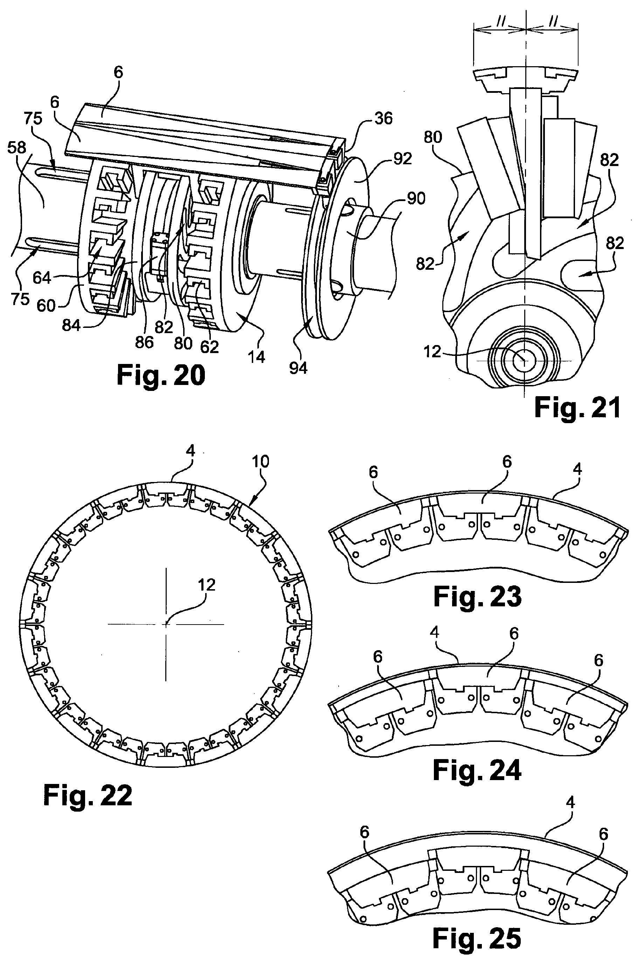

On choisit le diamètre de la face 10 du tambour en fonction des caractéristiques dimensionnelles de la bande de roulement à assembler. Le tambour étant dans la configuration des figures 22 et 23 dans laquelle les faces externes des secteurs s'étendent toutes à la même distance de l'axe 12 pour former une face 10 continue, on assemble des éléments sur cette face pour réaliser une bande de roulement 4. Certains au moins des éléments comprennent de la gomme crue et sont formés par exemple de bandelettes. On enroule ces éléments en un ou plusieurs tours sur la face 10, voire en plusieurs couches, et on effectue leur rouletage.

Une fois achevée la confection de la bande de roulement, on commande les vérins 86 de façon à déplacer en direction de l'axe 12 les groupes du deuxième type qui s'éloignent ainsi de la bande de roulement qui demeure supportée uniquement par les groupes du premier type, comme illustré à la figure 24. L'orientation en dépouille des faces 43 permet ces éloignement.

On relie alors la bande de roulement à d'autres moyens de support que le tambour.

Ensuite, les groupes du premier type peuvent aussi être rétractés en actionnant la vis 68. Au cours de ce mouvement, on ne commande pas les vérins, de sorte que les deux cames restent immobiles l'une par rapport à l'autre si bien que le décalage radial entre les groupes est conservé comme illustré à la figure 25. L'action de la vis provoque la rétraction radiale de tous les secteurs grâce aux deux cames. Les groupes qui avaient été rétractés en premier viennent se placer sous les bords des autres groupes, ce qui permet le mouvement centripète simultané de tous les groupes

On extrait ensuite le produit de la forme sommet suivant la direction axiale.

Comme on le voit, grâce aux vérins 86, actionnables à distance, on peut commander un mouvement radial des groupes du deuxième type indépendamment de celui des groupes du premier type.

On constitue ainsi une forme sommet ou tambour présentant une forme générale cylindrique et dont le diamètre peut être réglé à volonté entre deux diamètres minimal et maximal. Elle présente une face de dépose des produits qui sur une grande portion est lisse, sans trou et sans arête vive. Le choix et l'optimisation du rayon d'usinage des secteurs permettent pour une gamme de rayons donnés d'obtenir des qualités géométriques de la surface très proches de celles du cylindre théorique, ce qui rend le tambour particulièrement bien adapté pour la réalisation des sommets de pneumatique.

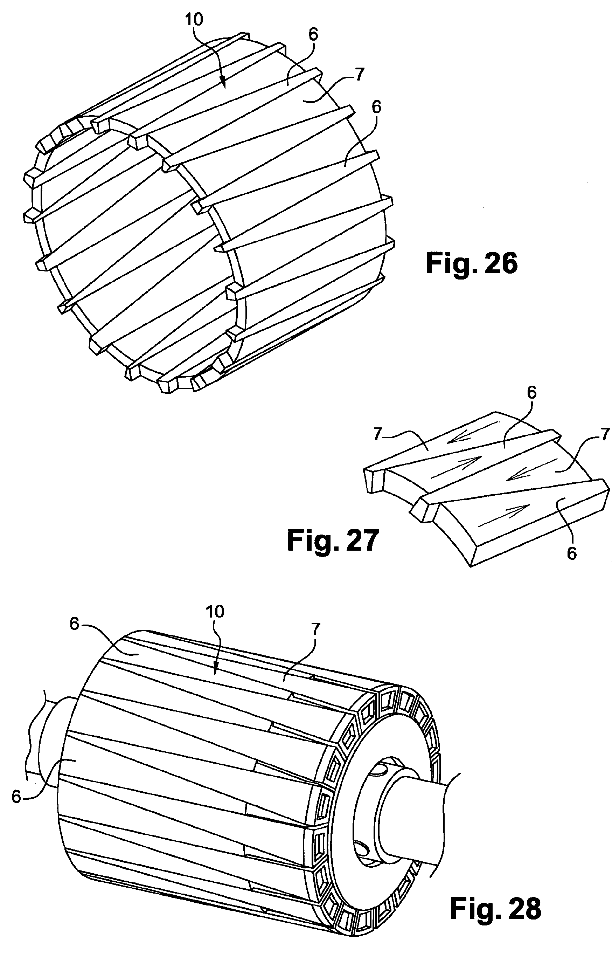

Une variante de réalisation du tambour est illustrée aux figures 26 et 27. Cette fois, chaque groupe est constitué d'un secteur primaire 6 et d'un seul secteur secondaire 7. Ces secteurs ont tous une forme de trapèze isocèle non-rectangle. Ils sont disposés en alternance suivant la direction circonférentielle et agencés tête-bêche. Comme précédemment, les groupes sont répartis en deux ensembles. Les groupes appartiennent aux ensembles respectifs en alternance suivant la direction circonférentielle. Chaque secteur présente une face externe circonférentielle ayant deux côtés d'adaptation non perpendiculaires à l'axe et non coplanaires à l'axe. Chaque côté d'adaptation d'un des secteurs primaires s'étend en regard de l'un des côtés d'adaptation d'un des secteurs secondaires et lui est contigu.

Cette fois, tant les secteurs primaires 6 que les secteurs secondaires 7 sont montés mobiles en direction axiale par rapport au support. Le tambour est agencé pour permettre de commander le mouvement axial des secteurs primaires, indépendamment de celui des secteurs secondaires. Comme précédemment, les secteurs secondaires sont portés par les secteurs primaires moyennant une liaison hélicoïdale de sorte que ceux-ci entraînent ceux-là au cours de leur mouvement radial. La conception générale du tambour est identique à celle du mode de réalisation précité mis à part qu'il faut prévoir une commande supplémentaire pour le déplacement axial des secteurs primaires. Dans cette variante aussi, on obtient un tambour qui présente une face externe circonférentielle continue et sans trou sur une grande portion.

Une autre variante est illustrée à la figure 28. Elle diffère de la précédente uniquement par le fait que seuls les secteurs secondaires 7 sont mobiles en direction axiale par rapport au support, les secteurs primaires 6 étant immobiles en direction axiale par rapport au support. La conception générale du tambour reste globalement identique.

Dans ces deux variantes aussi, l'imbrication des secteurs des deux types leur permet de supporter mutuellement les efforts de pose et de roulettage des produits.

Bien entendu, on pourra apporter à l'invention de nombreuses modifications sans sortir du cadre de celle-ci.

## Revendications

1. Tambour (2) de confection d'une ébauche de pneumatique, **caractérisé en ce qu'**il comporte :
- un support (14),
- des secteurs primaires (6) formant une partie d'une face circonférentielle du tambour et montés mobiles par rapport au support suivant une direction radiale à un axe du support ; et
- des secteurs secondaires (7a, 8a, 7b, 8b) formant une autre partie de la face circonférentielle et montés mobiles radialement par rapport au support, et suivant une direction parallèle à l'axe par rapport aux secteurs primaires chaque secteur présentant une face externe circonférentielle ayant au moins un côté d'adaptation (11, 13) non perpendiculaire à l'axe et non coplanaire à l'axe, chaque côté d'adaptation (11) d'un des secteurs primaires s'étendant en regard du côté d'adaptation (13) d'un des secteurs secondaires.

2. Tambour selon la revendication précédente dans lequel les côtés d'adaptation (11, 13) en regard l'un de l'autre sont contigus.

3. Tambour selon au moins l'une quelconque des revendications précédentes dans lequel, sur au moins certains (6, 7a, 8a, 7b, 8b) des secteurs, la face externe a une forme trapézoïdale.

4. Tambour selon au moins l'une quelconque des revendications précédentes dans lequel les secteurs secondaires (7a, 8a, 7b, 8b) sont montés mobiles par rapport aux secteurs primaires (6) suivant une direction circonférentielle du tambour.

5. Tambour selon au moins l'une quelconque des revendications précédentes dans lequel chaque secteur secondaire (7a, 8a, 7b, 8b) est monté mobile par rapport à l'un des secteurs primaires suivant une trajectoire hélicoïdale.

6. Tambour selon au moins l'une quelconque des revendications précédentes dans lequel chaque secteur secondaire (7a, 8a, 7b, 8b) est en appui sur l'un des secteurs primaires suivant la direction radiale.

7. Tambour selon au moins l'une quelconque des revendications précédentes, agencé de sorte que la position des secteurs secondaires en direction radiale est déterminée par celle des secteurs primaires (6).

8. Tambour selon au moins l'une quelconque des revendications précédentes, agencé de sorte que les secteurs primaires (6) emportent les secteurs secondaires (7a, 8a, 7b, 8b) quel que soit leur sens de déplacement radial.

9. Tambour selon au moins l'une quelconque des revendications précédentes dans lequel chaque secteur secondaire (7a, 8a, 7b, 8b) est retenu par l'un des secteurs primaires (6) au moyen d'un assemblage par complémentarité de forme, par exemple en queue d'aronde ou à profil prismatique.

10. Tambour selon au moins l'une quelconque des revendications précédentes, agencé de sorte que les secteurs (6, 7a, 8a, 7b, 8b) peuvent être mis en appui les uns contre les autres suivant la direction circonférentielle.

11. Tambour selon au moins l'une quelconque des revendications précédentes, agencé de sorte que certains (6, 7a, 8a, 7b, 8b) des secteurs peuvent être déplacés en direction radiale par rapport au support sans modifier la position des autres secteurs par rapport au support.

12. Tambour selon au moins l'une quelconque des revendications précédentes, dans lequel les secteurs secondaires (7a, 8a, 7b, 8b) sont montés par rapport au support de façon à pouvoir se déplacer par rapport au support suivant la direction axiale sans modifier leur position suivant la direction radiale.

13. Tambour selon au moins l'une quelconque des revendications précédentes, dans lequel chaque secteur secondaire est relié au support par un seul des secteurs primaires (6).

14. Tambour selon au moins l'une quelconque des revendications précédentes, qui comprend des moyens (66, 90, 92) de manoeuvre des secteurs secondaires par rapport au support en direction axiale.

15. Tambour selon au moins l'une quelconque des revendications précédentes, qui comprend un organe, tel qu'une came (80, 84), agencé pour déplacer plusieurs des secteurs simultanément en direction radiale.

16. Tambour selon la revendication précédente, dans lequel l'organe (80, 84) est agencé pour déplacer les secteurs sans déplacer les autres secteurs par rapport au support.

17. Tambour selon au moins l'une quelconque des revendications précédentes, dans lequel chaque secteur primaire (6) est associé à deux des secteurs secondaires qui sont reliés au support par ce secteur primaire, les deux secteurs secondaires étant de préférence reliés l'un à l'autre indépendamment du secteur primaire et du support de sorte que la position axiale de l'un des secteurs secondaires détermine celle de l'autre.

18. Tambour selon la revendication précédente, dans lequel les associations de secteurs forment des premier et deuxième ensembles disjoints d'associations, le tambour étant agencé de sorte qu'on peut déplacer les associations (6, 7b, 8b) du deuxième ensemble par rapport au support sans déplacer celles (6, 7a, 8a) du premier ensemble par rapport au support.

19. Tambour selon la revendication précédente, agencé de sorte que les secteurs (6, 7a, 8a) des associations du premier ensemble peuvent être mis en appui sur les secteurs (6, 7b, 8b) des associations du deuxième ensemble suivant la direction radiale lorsque des faces circonférentielles des secteurs s'étendent en prolongement les unes des autres.

20. Tambour selon au moins l'une quelconque des revendications précédentes, qui comprend deux cames (80, 84), mobiles l'une par rapport à l'autre et aptes à déplacer des secteurs respectifs, le tambour étant agencé de préférence de sorte que l'une des cames entraîne l'autre dans son déplacement, le tambour comprenant notamment au moins un actionneur (86) apte à déplacer les cames l'une par rapport à l'autre.

21. Tambour selon la revendication précédente, qui comprend des organes de commande (68, 66) reliés respectivement à la ou chaque came et à un équipage (90, 92) apte à entraîner les secteurs secondaires en direction axiale, les organes de commande étant aptes à être manoeuvrés indépendamment l'un de l'autre.

22. Procédé de fabrication d'un pneumatique, **caractérisé en ce qu'**on assemble une partie au moins d'une ébauche crue du pneumatique sur un tambour (2) selon au moins l'une quelconque des revendications précédentes.

## Patentansprüche

1. Aufbautrommel (2) eines Luftreifenrohlings, **dadurch gekennzeichnet, dass** sie aufweist:
- einen Träger (14),
- Primärabschnitte (6), die einen Teil einer Umfangsseite der Trommel bilden und bezüglich des Trägers in einer Richtung radial zu einer Achse des Trägers beweglich montiert sind; und
- Sekundärabschnitte (7a, 8a, 7b, 8b), die einen anderen Teil der Umfangsseite bilden und radial bezüglich des Trägers und in einer Richtung parallel zur Achse bezüglich der Primärabschnitte beweglich montiert sind;
wobei jeder Abschnitt eine äußere Umfangsseite aufweist, die mindestens eine Anpassungsseitenfläche (11, 13) nicht lotrecht zur Achse und nicht koplanar zur Achse hat, wobei jede Anpassungsseitenfläche (11) eines der Primärabschnitte sich gegenüber der Anpassungsseitenfläche (13) eines der Sekundärabschnitte erstreckt.

2. Trommel nach dem vorhergehenden Anspruch, wobei die einander gegenüberliegenden Anpassungsseitenflächen (11, 13) angrenzend sind.

3. Trommel nach mindestens einem der vorhergehenden Ansprüche, wobei in mindestens bestimmten (6, 7a, 8a, 7b, 8b) der Abschnitte die Außenseite eine Trapezform hat.

4. Trommel nach mindestens einem der vorhergehenden Ansprüche, wobei die Sekundärabschnitte (7a, 8a, 7b, 8b) bezüglich der Primärabschnitte (6) in einer Umfangsrichtung der Trommel beweglich montiert sind.

5. Trommel nach mindestens einem der vorhergehenden Ansprüche, wobei jeder Sekundärabschnitt (7a, 8a, 7b, 8b) bezüglich eines der Primärabschnitte gemäß einer Schraubenbahn beweglich montiert ist.

6. Trommel nach mindestens einem der vorhergehenden Ansprüche, wobei jeder Sekundärabschnitt (7a, 8a, 7b, 8b) in radialer Richtung auf einem der Primärabschnitte aufliegt.

7. Trommel nach mindestens einem der vorhergehenden Ansprüche, die so eingerichtet ist, dass die Stellung der Sekundärabschnitte in radialer Richtung durch diejenige der Primärabschnitte (6) bestimmt wird.

8. Trommel nach mindestens einem der vorhergehenden Ansprüche, die so eingerichtet ist, dass die Primärabschnitte (6) die Sekundärabschnitte (7a, 8a, 7b, 8b) unabhängig von ihrer radialen Verschiebungsrichtung mitnehmen.

9. Trommel nach mindestens einem der vorhergehenden Ansprüche, wobei jeder Sekundärabschnitt (7a, 8a, 7b, 8b) von einem der Primärabschnitte (6) mittels eines formschlüssigen Zusammenbaus gehalten wird, zum Beispiel schwalbenschwanzförmig oder mit prismatischem Profil.

10. Trommel nach mindestens einem der vorhergehenden Ansprüche, die so eingerichtet ist, dass die Abschnitte (6, 7a, 8a, 7b, 8b) in Umfangsrichtung gegeneinander angelegt werden können.

11. Trommel nach mindestens einem der vorhergehenden Ansprüche, die so eingerichtet ist, dass bestimmte (6, 7a, 8a, 7b, 8b) der Abschnitte in radialer Richtung bezüglich des Trägers verschoben werden können, ohne die Stellung der anderen Abschnitte bezüglich des Trägers zu verändern.

12. Trommel nach mindestens einem der vorhergehenden Ansprüche, wobei die Sekundärabschnitte (7a, 8a, 7b, 8b) bezüglich des Trägers so montiert sind, dass sie sich bezüglich des Trägers in der axialen Richtung verschieben können, ohne ihre Stellung in der radialen Richtung zu verändern.

13. Trommel nach mindestens einem der vorhergehenden Ansprüche, wobei jeder Sekundärabschnitt durch einen einzigen der Primärabschnitte (6) mit dem Träger verbunden ist.

14. Trommel nach mindestens einem der vorhergehenden Ansprüche, die Einrichtungen (66, 90, 92) zur Betätigung der Sekundärabschnitte bezüglich des Trägers in axialer Richtung enthält.

15. Trommel nach mindestens einem der vorhergehenden Ansprüche, die ein Element wie eine Nocke (80, 84) enthält, das eingerichtet ist, um mehrere der Abschnitte gleichzeitig in radialer Richtung zu verschieben.

16. Trommel nach dem vorhergehenden Anspruch, wobei das Element (80, 84) eingerichtet ist, um die Abschnitte zu verschieben, ohne die anderen Abschnitte bezüglich des Trägers zu verschieben.

17. Trommel nach mindestens einem der vorhergehenden Ansprüche, wobei jeder Primärabschnitt (6) mit zwei der Sekundärabschnitte vereinigt ist, die mit dem Träger durch diesen Primärabschnitt verbunden sind, wobei die zwei Sekundärabschnitte vorzugsweise unabhängig vom Primärabschnitt und vom Träger miteinander verbunden sind, so dass die axiale Stellung eines der Sekundärabschnitte diejenige des anderen bestimmt.

18. Trommel nach dem vorhergehenden Anspruch, wobei die Vereinigungen von Abschnitten eine erste und eine zweite getrennte Einheit von Vereinigungen bilden, wobei die Trommel so eingerichtet ist, dass die Vereinigungen (6, 7b, 8b) der zweiten Einheit bezüglich des Trägers verschoben werden können, ohne diejenigen (6, 7a, 8a) der ersten Einheit bezüglich des Trägers zu verschieben.

19. Trommel nach dem vorhergehenden Anspruch, die so eingerichtet ist, dass die Abschnitte (6, 7a, 8a) der Vereinigungen der ersten Einheit auf die Abschnitte (6, 7b, 8b) der Vereinigungen der zweiten Einheit in der radialen Richtung aufgelegt werden können, wenn Umfangsseiten der Abschnitte sich in gegenseitiger Verlängerung erstrecken.

20. Trommel nach mindestens einem der vorhergehenden Ansprüche, die zwei Nocken (80, 84) enthält, die zueinander beweglich und in der Lage sind, jeweilige Abschnitte zu verschieben, wobei die Trommel vorzugsweise so eingerichtet ist, dass eine der Nocken die andere bei ihrer Verschiebung antreibt, wobei die Trommel insbesondere mindestens einen Stellantrieb (86) enthält, der die Nocken zueinander verschieben kann.

21. Trommel nach dem vorhergehenden Anspruch, die Steuerelemente (68, 66) enthält, die mit der bzw. jeder Nocke und mit einer Ausrüstung (90, 92) verbunden sind, die die Sekundärabschnitte in axialer Richtung antreiben kann, wobei die Steuerelemente unabhängig voneinander betätigt werden können.

22. Verfahren zur Herstellung eines Luftreifens, **dadurch gekennzeichnet, dass** mindestens ein Teil eines Rohlings des Luftreifens auf einer Trommel (2) nach mindestens einem der vorhergehenden Ansprüche zusammengebaut wird.

## Claims

1. Drum (2) for building a green tyre blank, **characterized in that** it comprises:
- a support (14),
- primary sectors (6) forming part of a circumferential face of the drum and mounted with the ability to move with respect to the support in a direction radial to an axis of the support; and
- secondary sectors (7a, 8a, 7b, 8b) forming another part of the circumferential face and mounted with the ability to move radially with respect to the support and in a direction parallel to the axis with respect to the primary sectors
each sector having a circumferential external face having at least one adaptation side (11, 13) not perpendicular to the axis and not coplanar with the axis, each adaptation side (11) of one of the primary sectors extending facing the adaptation side (13) of one of the secondary sectors.

2. Drum according to the preceding claim, in which the adaptation sides (11, 13) facing one another are contiguous.

3. Drum according to at least either one of the preceding claims, in which, on at least some (6, 7a, 8a, 7b, 8b) of the sectors, the external face is of trapezoidal shape.

4. Drum according to at least any one of the preceding claims, in which the secondary sectors (7a, 8a, 7b, 8b) are mounted with the ability to move with respect to the primary sectors (6) in a circumferential direction of the drum.

5. Drum according to at least any one of the preceding claims, in which each secondary sector (7a, 8a, 7b, 8b) is mounted with the ability to move with respect to one of the primary sectors in a helical path.

6. Drum according to at least any one of the preceding claims, in which each secondary sector (7a, 8a, 7b, 8b) bears against one of the primary sectors in the radial direction.

7. Drum according to at least any one of the preceding claims, arranged so that the position of the secondary sectors in the radial direction is determined by that of the primary sectors (6).

8. Drum according to at least any one of the preceding claims, arranged so that the primary sectors (6) carry the secondary sectors (7a, 8a, 7b, 8b) with them whatever the direction in which they move radially.

9. Drum according to at least any one of the preceding claims, in which each secondary sector (7a, 8a, 7b, 8b) is retained by one of the primary sectors (6) by means of an assembly using complementing shapes, for example dovetail or prismatic profile shapes.

10. Drum according to at least any one of the preceding claims, arranged so that the sectors (6, 7a, 8a, 7b, 8b) can be made to bear against one another in the circumferential direction.

11. Drum according to at least any one of the preceding claims, arranged so that some (6, 7a, 8a, 7b, 8b) of the sectors can be moved in the radial direction with respect to the support without modifying the position of the other sectors with respect to the support.

12. Drum according to at least any one of the preceding claims, in which the secondary sectors (7a, 8a, 7b, 8b) are mounted with respect to the support in such a way as to be able to move with respect to the support in the axial direction without modifying their position in the radial direction.

13. Drum according to at least any one of the preceding claims, in which each secondary sector is connected to the support by just one of the primary sectors (6).

14. Drum according to at least any one of the preceding claims, which comprises means (66, 90, 92) of manoeuvring the secondary sectors with respect to the support in the axial direction.

15. Drum according to at least any one of the preceding claims, which comprises a member, such as a cam (80, 84) arranged to move several of the sectors simultaneously in the radial direction.

16. Drum according to the preceding claim, in which the member (80, 84) is arranged to move the sectors without moving the other sectors with respect to the support.

17. Drum according to at least any one of the preceding claims, in which each primary sector (6) is associated with two of the secondary sectors which are connected to the support by this primary sector, the two secondary sectors preferably being connected to one another independently of the primary sector and of the support so that the axial position of one of the secondary sectors determines that of the other.

18. Drum according to the preceding claim, in which the combinations of sectors form first and second disjointed sets of combinations, the drum being arranged so that the combinations (6, 7b, 8b) of the second set can be moved with respect to the support without moving those (6, 7a, 8a) of the first set with respect to the support.

19. Drum according to the preceding claim, arranged so that the sectors (6, 7a, 8a) of the combinations of the first set can be brought to bear against the sectors (6, 7b, 8b) of the combinations of the second set in the radial direction when the circumferential faces of the sectors are extending in the continuation of one another.

20. Drum according to at least any one of the preceding claims, which comprises two cams (80, 84), able to move relative to one another and able to move the respective sectors, the drum being preferably arranged so that one of the cams drives the other in its movement, the drum notably comprising at least one actuator (86) able to move the cams relative to one another.

21. Drum according to the preceding claim, which comprises control members (68, 66) respectively connected to the or each cam and to equipment (90, 92) able to drive the secondary sectors in the axial direction, the control members being able to be operated independently of one another.

22. Method of manufacturing a tyre, **characterized in that** at least part of a green tyre blank is built on a drum (2) according to at least any one of the preceding claims.
